# EUROPÄISCHE PATENTANMELDUNG

(11) **EP 1 382 473 A2**
(43) Veröffentlichungstag der Anmeldung: **21.01.2004**
(21) Anmeldenummer: 03015449.6
(22) Anmeldetag: 09.07.2003
(51) Int. Cl.: B60J 7/22

(54) **Fahrzeugdach**

(30) Priorität: 19.07.2002 DE 10232917
(71) Anmelder: Webasto Vehicle Systems International GmbH, 82131 Stockdorf (DE)
(72) Erfinder: Karami, Jadolah Malamiri, 85521 Ottobrunn (DE); Kiedl, Martin, 80992 München (DE); Pregler, Werner, 82166 Lochham (DE); Wingen, Bernhard, 83620 Feldkirchen (DE); Wittal, Roland, 80687 München (DE)
(74) Vertreter: Bedenbecker, Markus

(57) **Zusammenfassung**

Fahrzeugdach mit einem Deckel (10), der zum Verschließen und Freilegen einer Dachöffnung (11) verschiebbar ist, einem im Bereich des vorderen Dachöffnungsrandes angeordneten Windabweiser (16), der zwischen einer abgesenkten und einer ausgestellten Position schwenkbar gelagert und in Richtung der ausgestellten Position vorgespannt ist und der beim Schließen des Deckels gegen Federkraft abgesenkt wird, sowie einer Stellvorrichtung (24) zum Einstellen von Windabweiser-Zwischenpositionen. Die Stellvorrichtung weist mindestens einen Niederhalter, gegen den der Windabweiser bei Freigabe für eine Ausstellbewegung gehalten ist, und eine Verstellmechanik (35) auf, mittels deren der Niederhalter zur Vorgabe der Windabweiser-Zwischenpositionen höhenverstellbar ist. Der Niederhalter ist von einem mit dem Windabweiser verbundenen Ende (29) mindestens eines flexiblen Elements (28) gebildet, das über eine zum Übertragen von Längsbewegungen ausgebildete biegsame Welle (37, 37') mit einem Stellmotor (43, 43', 43") in Antriebsverbindung steht.

## Beschreibung

Die Erfindung betrifft ein Fahrzeugdach mit mindestens einem Deckel, der zum wahlweisen Verschließen und mindestens teilweisen Freilegen einer Dachöffnung verschiebbar ist, mit einem im Bereich des vorderen Randes der Dachöffnung angeordneten Windabweiser, der um eine dachfeste Achse zwischen einer abgesenkten Position und einer voll ausgestellten Position schwenkbar gelagert und in Richtung der voll ausgestellten Position federnd vorgespannt ist und der beim Schließen des Deckels gegen Federkraft abgesenkt wird, sowie mit einer Stellvorrichtung zum Einstellen von Zwischenpositionen des Windabweisers, wobei die Stellvorrichtung mindestens einen Niederhalter, gegen den der Windabweiser bei Freigabe für eine Ausstellbewegung mittels der Federkraft gehalten ist, und eine Verstellmechanik aufweist, mittels deren der Niederhalter zur Vorgabe der Zwischenpositionen des Windabweisers höhenverstellbar ist.

Ein gattungsgemäßes Fahrzeugdach ist aus DE 199 58 742 A1 bekannt. Bei dem bekannten Dach ist die Stellvorrichtung mit einer Hebelmechanik versehen, die zwei spiegelsymmetrische Stellwippen aufweist, deren eines Ende jeweils einen Anschlag für den Windabweiser bildet und deren anderes Ende an einen Steuerhebel angelenkt ist, der auf einer Abtriebswelle des Stellantriebs sitzt. Die bekannte Lösung erfordert im Bereich der Vorderkante der Dachöffnung einen verhältnismäßig großen Einbauraum, was dem Wunsch entgegensteht, die Dachöffnung möglichst groß auszubilden.

Es ist Aufgabe der vorliegenden Erfindung, ein Fahrzeugdach zu schaffen, das kompakter aufgebaut werden kann und bei dem insbesondere im Bereich der Vorderkante der Dachöffnung weniger zusätzlicher Einbauraum für die die Zwischenpositionen des Windabweisers erlaubende Stellvorrichtung erforderlich ist.

Diese Aufgabe wird erfindungsgemäß dadurch gelöst, dass der Niederhalter von einem mit dem Windabweiser verbundenen Ende eines flexiblen Elements gebildet ist, das über eine zum Übertragen von Längsbewegungen ausgebildete biegsame Welle mit einem Stellmotor in Antriebsverbindung steht.

Das Fahrzeugdach nach der Erfindung hat eine besonders einfache Mechanik mit kompaktem Aufbau. Die erfindungsgemäße Windabweiser-Stellvorrichtung lässt sich als Ganzes raumsparend im Bereich des vorderen Randes der Dachöffnung unterbringen. Des weiteren ist die Windabweiser-Stellvorrichtung mit relativ geringen Reibungsverlusten behaftet. Dadurch genügt für einen zugeordneten Stellmotor eine vergleichsweise niedrige Motorleistung.

Bevorzugte Ausgestaltungen der Erfindung ergeben sich aus den Unteransprüchen.

Das flexible Element kann einfach als Gurtband, Seil, Draht oder dergleichen ausgebildet und mit einem längsbewegbaren Glied der biegsamen Welle gekoppelt sein. Entsprechend einer abgewandelten Ausführungsform kann das flexible Element aber auch von dem längsbewegbaren Glied der biegsamen Welle gebildet sein.

Vorzugsweise ist an dem flexiblen Element und/oder an der biegsamen Welle mindestens ein Endanschlag zum Festlegen der Windabweiserposition in einer Windabweiserendlage angebracht. Insbesondere kann das flexible Element zwei in Abstand voneinander angeordnete Endanschläge zur Vorgabe beider Endlagen des Windabweisers tragen.

Als biegsame Welle eignet sich vorliegend vor allem ein Bowdenzug. Grundsätzlich können aber auch beliebige andere bekannte biegsame Wellen vorgesehen sein, die zum Übertragen von Längsbewegungen ausgebildet sind.

Als Stellmotor ist vorzugsweise ein Linearmotor vorgesehen, da dann keine zusätzlichen Zwischenglieder zum Umsetzen einer drehenden Bewegung in eine Linearbewegung notwendig werden. Stattdessen kann aber der Stellmotor auch als Rotationsmotor mit nachgeschalteter Anordnung zum Umsetzen einer Drehbewegung in eine Linearbewegung ausgebildet sein.

Der Stellmotor kann in Abhängigkeit von der Fahrtgeschwindigkeit und/oder von dem Öffnungsgrad des Deckels angesteuert sein, um den Austellwinkel des Windabweisers selbsttätig an die jeweils gegebenen Bedingungen optimal anzupassen.

An einen gemeinsamen Stellmotor sind zweckmäßig mindestens zwei biegsame Wellen angekoppelt, die mit flexiblen Elementen verbunden sind, die an voneinander beabstandeten Stellen des Windabweisers, vorzugsweise nahe den seitlichen Enden eines Teil des Windabweisers bildenden Windabweiserblattes, angreifen und eine exakte Einstellung des Windabweisers mit Bezug auf den übrigen Teil des Fahrzeugdaches, insbesondere die Dachhaut, sicherstellen. Es versteht sich, dass unter Umständen ein einziges, vorzugsweise in der Mitte des Windabweisers beziehungsweise eines Windabweiserblattes angreifendes, flexibles Element ausreichen kann. Andererseits können gegebenenfalls auch mehr als zwei flexible Elemente vorgesehen sein, die an in Abstand voneinander liegenden Stellen mit dem Windabweiser (dem Windabweiserblatt und/oder Windabweiserarmen) gekoppelt sind. Bei Verwendung von zwei oder mehr flexiblen Elementen ist es grundsätzlich auch möglich, jedem flexiblen Element eine eigene Verstellmechanik zuzuordnen.

In weiterer Ausgestaltung der Erfindung sind die biegsamen Wellen an den Stellmotor über einen Ausgleichshebel angekoppelt, der Toleranzen in den biegsamen Wellen und deren Verlegung ausgleicht. Ferner ist vorzugsweise die mindestens eine biegsame Welle an den Stellmotor federnd angekoppelt, um Schäden an der Stellvorrichtung auszuschließen, die ein Nachlaufen des Stellmotors nach Erreichen einer Windabweiser-Endlage bewirken könnte.

Die gesamte Stellvorrichtung lässt sich platzsparend im Bereich des vorderen Randes der Dachöffnung anordnen.

Um den Kraftaufwand für das Betätigen der Stellvorrichtung zu minimieren, ist vorteilhaft das flexible Element um eine Umlenkung geführt, die derart angeordnet ist, dass die von dem flexiblen Element auf den Windabweiser ausgeübte Kraft mindestens näherungsweise tangential zu der Bahn gerichtet ist, welche die Anlenkstelle des flexiblen Elements an den Windabweiser bei einem Verschwenken des Windabweisers beschreibt.

Im folgenden wird die Erfindung anhand der beigefügten Zeichnungen beispielhaft näher erläutert. Es zeigen:
- Fig. 1: eine schematische Seitenansicht eines Teil eines Fahrzeugdaches mit einem Windabweiser im ausgestellten Zustand,
- Fig. 2: eine Ansicht des linken Teils des mit dem Windabweiser versehenen Fahrzeugdaches von unten gesehen,
- Fig. 3: einen Schnitt entlang der Linie A-A in Fig. 2,
- Fig. 4: einen Schnitt ähnlich Fig. 3 für eine abgewandelte Ausführungsform sowie
- Fign. 5 und 6: alternative Ausführungsbeispiele des Stellmotors.

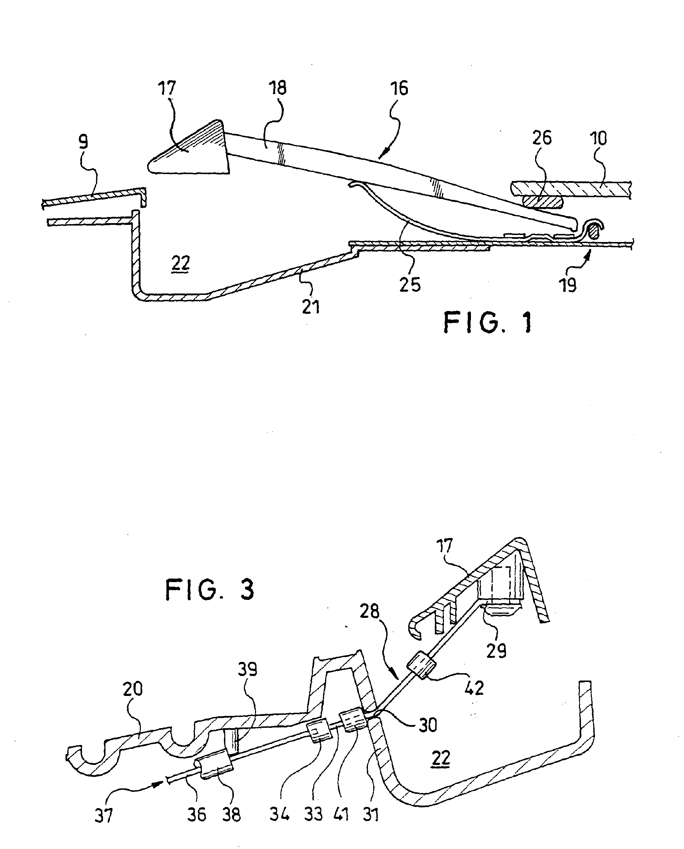

Bei dem in den Figuren dargestellten Ausführungsbeispiel des Fahrzeugdaches handelt es sich um ein Schiebe- oder Schiebehebedach mit einem nur in Fig. 1 angedeuteten verschiebbaren Deckel 10 zum wahlweisen Verschließen und mindestens teilweisen Freilegen einer Dachöffnung 11, die in einer festen Dachhaut 9 ausgebildet ist. Zum Verstellen des Deckels 10 kann ein Deckelantrieb bekannter Art vorgesehen sein. Zu diesem Antrieb gehört beispielsweise ein Deckelantriebsmotor, der über in Kabelkanälen 13, 14 geführte drucksteife Antriebskabel mit Antriebsschlitten verbunden ist, die zu beiden Seiten der Dachöffhung 11 in seitlichen Führungsschienen in der Deckelverschieberichtung verschiebbar geführt sind und mit dem Deckel 10 in Antriebsverbindung stehen. Die Deckelverschieberichtung entspricht der Längsrichtung des mit dem Fahrzeugdach ausgestatteten Fahrzeugs, und die vorliegend verwendeten Begriffe "vorne" und "hinten" sowie "links" und "rechts" beziehen sich auf die normale Fahrtrichtung des Fahrzeugs.

Im Bereich des vorderen Randes 15 der Dachöffnung 11 befindet sich ein Windabweiser 16, der im gezeigten Ausführungsbeispiel ein parallel zu dem vorderen Dachöffnungsrand ausgerichtetes Windabweiserblatt 17 und zwei seitliche Windabweiserarme 18 aufweist, die an einem dachfesten Gelenk 19 um eine in Dachquerrichtung verlaufende Schwenkachse schwenkbar gelagert sind. In einer abgesenkten Position (Ruhestellung) taucht das Windabweiserblatt 17 unter dem Deckel 10 in einen von einem vorderen Teil 20 eines Dachrahmens 21 begrenzten Raum 22. In der in Fig. 1 gezeigten voll ausgestellten Position steht das Windabweiserblatt 17 oberhalb der Dachebene. Mittels einer Stellvorrichtung 24, die insgesamt gleichfalls im Bereich des vorderen Randes 15 der Dachöffnung 11 angeordnet ist, kann dafür gesorgt werden, dass der Windabweiser 16 Zwischenpositionen zwischen der Ruhestellung und der voll ausgestellten Position einnimmt.

Der Windabweiser 16 ist in Ausstellrichtung federnd vorgespannt, z.B. mittels als Blattfedern ausgebildeten Ausstellfedern 25, die sich von unten gegen die Windabweiserarme 18 andrücken und die Windabweiserarme um das Gelenk 19 nach oben zu schwenken suchen. Beim Schließen des Deckels 10 legen sich Nocken 26, die zusammen mit dem Deckel 10 verstellbar und beispielsweise an der Deckelunterseite angebracht sind, in üblicher Weise von oben gegen die Windabweiserarme 18 an, um den Windabweiser 16 über den Deckelantrieb entgegen der Kraft der Ausstellfedern 25 abzusenken. Auf diese Weise wird in der Schließstellung des Deckels 10 der Windabweiser 16 entgegen Federvorspannung in seiner Ruhestellung unterhalb des Deckels 10 gehalten. Beim Öffnen des Deckels 10 werden dagegen die Windabweiserarme 18 durch den Deckel 10 freigegeben, so dass die Ausstellfedern 25 den Windabweiser 16 nach oben schwenken können. Dabei ist die Ausstellbewegung des Windabweisers 16 durch die nachstehend näher erläuterte Stellvorrichtung 24 begrenzt.

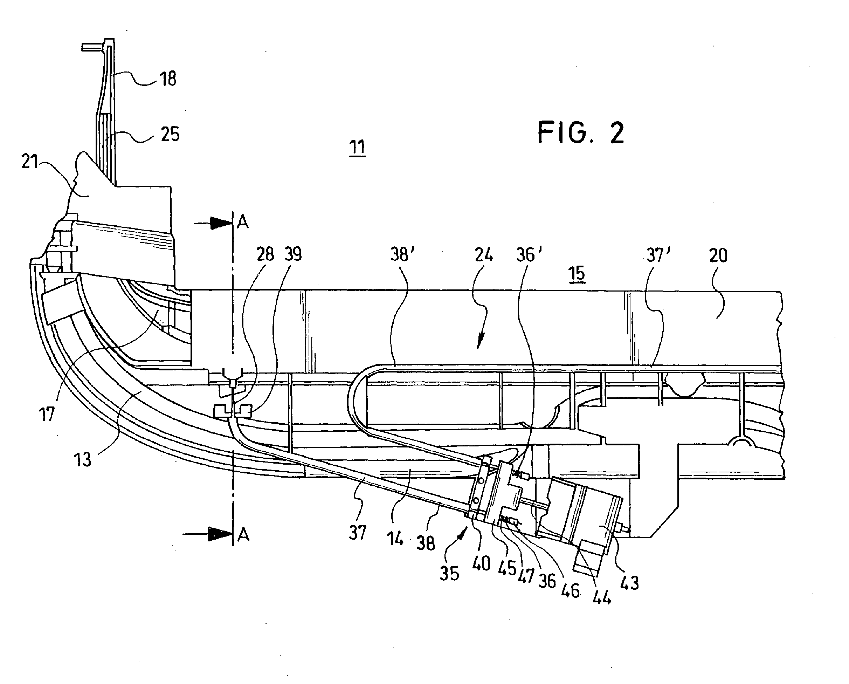

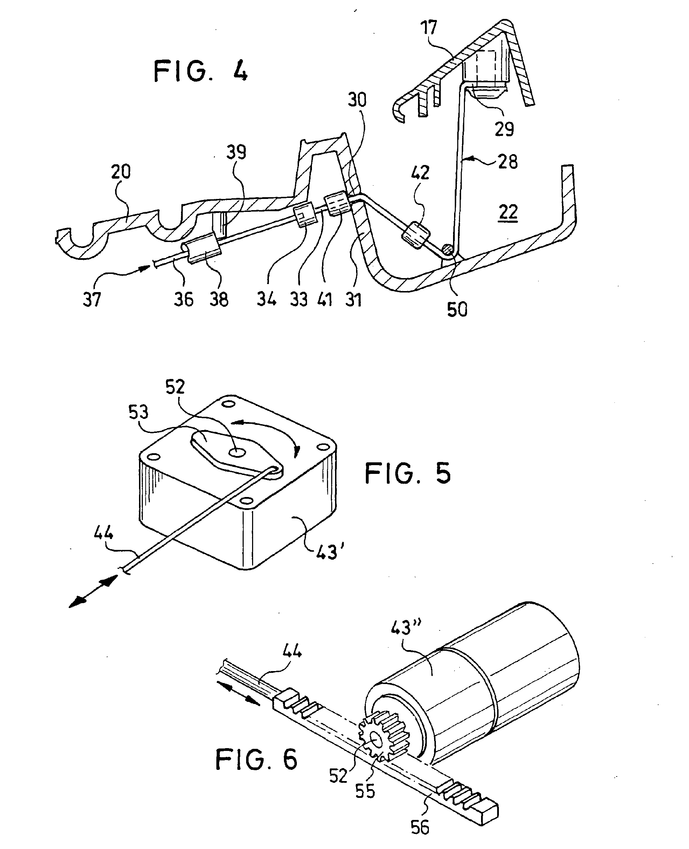

Die der Vorgabe der Größe der Ausstellbewegung des Windabweisers 16 dienende Stellvorrichtung 24 weist vorliegend zwei flexible Elemente 28 auf, die nahe den beiden seitlichen Enden des Windabweiserblattes 17 angreifen und die im veranschaulichten Ausführungsbeispiel die Form eines Draht- oder Seilstückes haben, bei denen es sich aber auch um Gurtbänder oder dergleichen handeln kann. Das mit der linken Seite des Windabweiserblattes 17 verbundene eine dieser flexible Elemente 28 ist in den Figuren 2 und 3 gezeigt. Das mit der rechten Seite des Windabweiserblattes 17 zusammenwirkende weitere flexible Element ist entsprechend ausgebildet und angeordnet. Das jeweils eine Ende 29 der flexiblen Elemente 28 ist, wie insbesondere aus Fig. 3 hervorgeht, an dem Windabweiserblatt 17, vorzugsweise an dessen Unterseite, angebracht. Die flexiblen Elemente 28 sind jeweils durch einen Durchgang 30 einer Wand 31 des Rahmenvorderteils 20 nach vorne in einer Richtung parallel zur Verschieberichtung des Deckels 10 hindurchgeführt. Ihr anderes Ende 33 ist jeweils über ein Koppelstück 34 mit einem längsbewegbaren Glied 36 beziehungsweise 36' einer zum Übertragen von Längsbewegungen ausgebildeten biegsamen Welle 37 beziehungsweise 37' verbunden, die Teil einer insgesamt mit 35 bezeichneten Verstellmechanik ist.

Die biegsamen Wellen 37, 37' sind vorliegend als Bowdenzüge ausgebildet. Sie weisen jeweils eine biegsame Führungshülle 38 beziehungsweise 38' auf, durch die sich das längsbewegbare Glied 36 beziehungsweise 36' hindurcherstreckt. Die beiden Enden jeder Führungshülle 38, 38' liegen an rahmenfesten Anschlägen 39, 40 an, wodurch die Führungshüllen an Längsbewegungen gehindert werden. Jedes der flexiblen Elemente 28 trägt zwei in Abstand voneinander angeordnete Endanschläge 41, 42, von denen der Anschlag 41 mit der vorderen und der Anschlag 42 mit der hinteren Seite der Wand 31 zusammenwirkt. Der Anschlag 41 bestimmt im Zusammenwirken mit der Wand 31 die Position des Windabweisers 16 in seiner einen Endlage, nämlich seiner maximal ausgestellten Lage, während der Anschlag 42 zusammen mit der Wand 31 die Position des Windabweisers 16 in seiner anderen Endlage, nämlich seiner maximal eingefahrenen Lage, vorgibt.

Die flexiblen Elemente 28 und die längsbewegbaren Glieder 36 beziehungsweise 36' können auch einstückig ausgebildet sein. Das heißt, die flexiblen Elemente 28 können von den längsbewegbaren Gliedern 36, 36' selbst gebildet sein, so dass die Koppelstücke 34 entfallen können.

Zu der Verstellmechanik 35 gehört ferner ein eigener, das heißt unabhängig von dem Deckelantrieb betätigbarer, Stellmotor 43, der bevorzugt als Linearmotor ausgebildet ist. Grundsätzlich ist es aber auch möglich, einen Rotationsmotor vorzusehen, dem eine Anordnung zum Umsetzen einer Drehbewegung in eine Linearbewegung nachgeschaltet ist. Zweckmäßig ist der Stellmotor 43 in einem mittleren Bereich des Rahmenvorderteils 20 angeordnet. Mit einem linear verstellbaren Abtriebsteil 44 des Stellmotors 43 ist ein Ausgleichshebel 45 verbunden, der sich quer zu der Verstellrichtung des Abtriebsteils 44 erstreckt. An den Ausgleichshebel 45 sind die von dem Windabweiserblatt 17 abgewendeten Enden der längsbewegbaren Glieder 36, 36' an Stellen angekoppelt, die nahe den Enden des Ausgleichshebels 45 symmetrisch in seitlichem Abstand zu dem Abtriebsteil 44 liegen. Dazu sind die längsbewegbaren Glieder 36, 36' mit Spiel durch Bohrungen des Ausgleichshebels 45 hindurchgeführt und an ihrem Ende mit jeweils einem Nippel 46 versehen. Zwischen den Nippeln 46 und der dem Stellmotor 43 zugewendeten Stirnfläche des Ausgleichshebels 45 sitzen Schraubenfedern 47. Diese Federn umgreifen die den Nippeln 46 benachbarten Endabschnitte der längsbewegbaren Glieder 36, 36', und sie legen sich mit ihren Enden einerseits an den betreffenden Nippel 46 und andererseits an den Ausgleichshebel 45 an. Dadurch, dass auf diese Weise die längsbewegbaren Glieder 36, 36' der biegsamen Wellen 37, 37' stellmotorseitig in dem Ausgleichshebel 45 zusammenlaufen, werden Längentoleranzen der biegsamen Wellen ausgeglichen. Die Federn 47 verhindern Beschädigungen der Stellvorrichtung 24 für den Fall, dass der Stellmotor 43 mit gewisser Verzögerung abschaltet, nachdem der Windabweiser 16 seine untere Endstellung erreicht hat, in der sich der Endanschlag 42 gegen die Wand 31 anlegt.

Die beschriebene Anordnung in folgender Weise:

In der Schließstellung des Deckels 10 legen sich die mit dem Deckel mitbewegbaren Nocken 26 gegen die Windabweiserarme 18 an. Der Windabweiser 16 wird von dem Deckel 10 entgegen der von den Federn 25 ausgeübten Vorspannung in der eingefahrenen Ruhestellung unterhalb des Deckels 10 gehalten. Die flexiblen Elemente 28 sind entspannt, und sie können sich in dem Raum 22 über dem vorderen Dachrahmenteil 20 raumsparend zusammenlegen.

Wird der Deckel 10 mittels des Deckelantriebs nach hinten verschoben, geben die mit den Windabweiserarmen 18 zusammenwirkenden deckelfesten Nocken 26 den Windabweiser 16 für eine Austellbewegung frei. Der Windabweiser 16 wird unter dem Einfluss der auf ihn einwirkenden Ausstellfedern 25 so weit ausgestellt, wie dies die Stellvorrichtung 24 zulässt.

Wenn dabei das Abtriebsteil 44 des Stellmotors 43 und der damit verbundene Ausgleichshebel 45 ihre in Fig. 2 veranschaulichte eine Endstellung einnehmen, sind die längsbewegbaren Glieder 36, 36' der biegsamen Wellen 37, 37', wie in den Figuren 2 und 3 dargestellt, nach hinten ausgefahren. Der Endanschlag 41 legt sich gegen die Wand 31 an. Der Windabweiser 16 nimmt seine maximal ausgestellte Lage ein. Letztere kann beispielsweise so gewählt sein, dass das Windabweiserblatt 17 vom Fahrtwind nicht nur überströmt wird, sondern zwecks Minimierung von Wummergeräuschen ein Teilluftstrom auch unter dem Windabweiserblatt 17 durchgeleitet wird.

Soll dagegen der Austellwinkel des Windabweisers 16 verringert werden, wird der unabhängig von dem Deckelantrieb ansteuerbare Stellmotor 43 aktiviert. Der Ausgleichshebel 45 wird dadurch in Richtung auf den Stellmotor 43 verschoben und nimmt die längsbewegbaren Glieder 36, 36' mit. Die flexiblen Elemente 28 werden schräg nach vorne und unten gezogen. Der Windabweiser 16 wird daher, nachdem er durch den Deckel 10 freigegeben ist, mittels der Ausstellfedern 25 nur um ein entsprechend geringeres Maß ausgestellt, zum Beispiel in eine mittlere Position, in welcher das Windabweiserblatt 17 vom Fahrtwind nur überströmt, nicht aber auch unterströmt wird.

Die Auslegung kann so getroffen sein, dass der vorzugsweise elektrische Stellmotor 43 von Hand aus- und eingeschaltet wird. Stattdessen oder als zusätzliche Wahlmöglichkeit kann aber auch für eine automatische Ansteuerung des Stellmotors 43 in Abhängigkeit beispielsweise von der Fahrtgeschwindigkeit und/oder von dem Öffnungsgrad des Deckels 10 gesorgt sein. Durch entsprechende Kopplung der Ansteuerung des Stellmotors 43 mit der Stellung des Deckels 10 kann gegebenenfalls auch auf ein Niederdrücken des Windabweisers 16 durch den Deckel 10 verzichtet und stattdessen der Windabweiser beim Schließen des Deckels mittels des Stellmotors 43 über die biegsamen Wellen 37, 37' nach unten gezogen werden.

Bei der in Fig. 4 dargestellten abgewandelten Ausführungsform ist unterhalb des Windabweiserblattes 17 zwischen diesem und dem Durchgang 30 eine rahmenfeste Umlenkung 50 vorgesehen, um die das flexible Element 28 herumgeführt ist. Die Umlenkung 50 ist so angeordnet, dass das flexible Element 28 mit der Unterseite des Windabweiserblattes 17 einen im Vergleich zu Fig. 3 größeren Winkel bildet. Dieser Winkel ist vorzugsweise so bemessen, dass das flexible Element 28 im Bereich zwischen dem Windabweiserblatt 17 und der Umlenkung 50 mindestens näherungsweise tangential zu der Bahn ausgerichtet ist, die von der Anlenkstelle des flexiblen Elements 28 an dem Windabweiser 16 beschrieben wird, wenn der Windabweiser 16 verschwenkt wird. Dadurch wird die zum Betätigen der Stellvorrichtung 24 benötigte Kraft verringert.

Die Figuren 5 und 6 zeigen zwei Ausführungsbeispiele für Rotationsmotore mit nachgeschalteter Anordnung zum Umsetzen einer Drehbewegung in eine Linearbewegung, die anstelle des als Linearmotor ausgebildeten Stellmotors 43 zum Verstellen der biegsamen Wellen 37, 37' vorgesehen sein können.

Bei der Ausführungsform der Fig. 5 sitzt auf der sich drehenden Abtriebswelle 52 eines als Getriebemotor ausgebildeten Stellmotors 43' ein Hebel 53. Der Hebel 53 kann über ein Abtriebsteil 44 entsprechend Fig. 2 mit dem linear hin und her verstellbaren Ausgleichshebel 45 verbunden sein.

Fig. 6 zeigt einen gleichfalls als Getriebemotor mit drehbarer Abtriebswelle 52 ausgebildeten Stellmotor 43", bei dem auf der Abtriebswelle 52 ein Zahnritzel 55 sitzt. Das Ritzel 55 kämmt mit einer Zahnstange 56. Letztere ist über das Abtriebsteil 44 mit dem Ausgleichshebel 45 gekoppelt.

### Bezugszeichenliste

- 9: Dachhaut
- 10: Deckel
- 11: Dachöffnung
- 13, 14: Kabelanal
- 15: vorderer Rand von 11
- 16: Windabweiser
- 17: Windabweiserblatt
- 18: Windabweiserarm
- 19: Gelenk
- 20: Rahmenvorderteil
- 21: Dachrahmen
- 22: Raum
- 24: Stellvorrichtung
- 25: Ausstellfeder
- 26: Nocken
- 28: flexibles Element
- 29: Ende von 28
- 30: Durchgang
- 31: Wand
- 33: Ende von 28
- 34: Koppelstück
- 35: Verstellmechanik
- 36, 36': längsbewegbares Glied
- 37, 37': biegsame Welle
- 38, 38': Führungshülle
- 39, 40: Anschlag
- 41, 42: Endanschlag
- 43: Stellmotor
- 44: Abtriebsteil
- 45: Ausgleichshebel
- 46: Nippel
- 47: Schraubenfeder
- 50: Umlenkung
- 52: Abtriebswelle
- 53: Hebel
- 55: Zahnritzel
- 56: Zahnstange

## Patentansprüche

1. Fahrzeugdach mit mindestens einem Deckel (10), der zum wahlweisen Verschließen und mindestens teilweisen Freilegen einer Dachöffnung (11) verschiebbar ist, mit einem im Bereich des vorderen Randes (15) der Dachöffnung angeordneten Windabweiser (16), der um eine dachfeste Achse zwischen einer abgesenkten Position und einer voll ausgestellten Position schwenkbar gelagert und in Richtung der voll ausgestellten Position federnd vorgespannt ist und der beim Schließen des Deckels gegen Federkraft abgesenkt wird, sowie mit einer Stellvorrichtung (24) zum Einstellen von Zwischenpositionen des Windabweisers, wobei die Stellvorrichtung mindestens einen Niederhalter, gegen den der Windabweiser bei Freigabe für eine Ausstellbewegung mittels der Federkraft gehalten ist, und eine Verstellmechanik (35) aufweist, mittels deren der Niederhalter zur Vorgabe der Zwischenpositionen des Windabweisers höhenverstellbar ist, **dadurch gekennzeichnet, dass** der Niederhalter von einem mit dem Windabweiser verbundenen Ende (29) eines flexiblen Elements (28) gebildet ist, das über eine zum Übertragen von Längsbewegungen ausgebildete biegsame Welle (37, 37') mit einem Stellmotor (43, 43', 43") in Antriebsverbindung steht.

2. Fahrzeugdach nach Anspruch 1, **dadurch gekennzeichnet, dass** das flexible Element (28) als Gurtband, Seil oder Draht ausgebildet ist.

3. Fahrzeugdach nach einem der vorhergehenden Ansprüche, **dadurch gekennzeichnet, dass** das flexible Element (28) mit einem längsbewegbaren Glied (36, 36') der biegsamen Welle (37, 37') gekoppelt ist.

4. Fahrzeugdach nach Anspruch 1 oder 2, **dadurch gekennzeichnet, dass** das flexible Element von einem längsbewegbaren Glied (33) der biegsamen Welle (37, 37') gebildet ist.

5. Fahrzeugdach nach einem der vorhergehenden Ansprüche, **dadurch gekennzeichnet, dass** an dem flexiblen Element (28) und/oder an der biegsamen Welle (37, 37') mindestens ein Endanschlag (41, 42) zum Festlegen der Windabweiserposition in einer Windabweiserendlage angebracht ist.

6. Fahrzeugdach nach Anspruch 5, **dadurch gekennzeichnet, dass** das flexible Element (28) zwei in Abstand voneinander angeordnete Endanschläge (41, 42) zur Vorgabe beider Endlagen des Windabweisers (16) trägt.

7. Fahrzeugdach nach einem der vorhergehenden Ansprüche, **dadurch gekennzeichnet, dass** als biegsame Welle (37, 37') ein Bowdenzug vorgesehen ist.

8. Fahrzeugdach nach einem der vorhergehenden Ansprüche, **dadurch gekennzeichnet, dass** der Stellmotor (43) als Linearmotor ausgebildet ist.

9. Fahrzeugdach nach einem der Ansprüche 1 bis 7, **dadurch gekennzeichnet, dass** der Stellmotor (43', 43") als Rotationsmotor mit nachgeschalteter Anordnung (44, 53; 55, 56) zum Umsetzen einer Drehbewegung in eine Linearbewegung ausgebildet ist.

10. Fahrzeugdach nach einem der vorhergehenden Ansprüche, **dadurch gekennzeichnet, dass** der Stellmotor (43, 43', 43") in Abhängigkeit von der Fahrtgeschwindigkeit und/oder von dem Öffnungsgrad des Deckels (10) angesteuert ist.

11. Fahrzeugdach nach einem der vorhergehenden Ansprüche, **dadurch gekennzeichnet, dass** an einen gemeinsamen Stellmotor (43, 43', 43") mindestens zwei biegsame Wellen (37, 37') angekoppelt sind, die mit flexiblen Elementen (28) verbunden sind, die an voneinander beabstandeten Stellen des Windabweisers (16) angreifen.

12. Fahrzeugdach nach Anspruch 11, **dadurch gekennzeichnet, dass** die flexiblen Elemente (28) nahe den seitlichen Enden eines einen Teil des Windabweisers (16) bildenden Windabweiserblattes (17) angreifen.

13. Fahrzeugdach nach Anspruch 11 oder 12, **dadurch gekennzeichnet, dass** die biegsamen Wellen (37, 37') an den Stellmotor (43, 43', 43") über einen Toleranzen ausgleichenden Ausgleichshebel (45) angekoppelt sind.

14. Fahrzeugdach nach einem der vorhergehenden Ansprüche, **dadurch gekennzeichnet, dass** die mindestens eine biegsame Welle (37, 37') an den Stellmotor (43, 43', 43") federnd (47) angekoppelt ist.

15. Fahrzeugdach nach einem der vorhergehenden Ansprüche, **dadurch gekennzeichnet, dass** die gesamte Stellvorrichtung (24) im Bereich des vorderen Randes (15) der Dachöffnung (11) angeordnet ist.

16. Fahrzeugdach nach einem der vorhergehenden Ansprüche, **dadurch gekennzeichnet, dass** das flexible Element (28) um eine Umlenkung (50) geführt ist, die derart angeordnet ist, dass die von dem flexiblen Element (28) auf den Windabweiser (16) ausgeübte Kraft mindestens näherungsweise tangential zu der Bahn gerichtet ist, welche die Anlenkstelle des flexiblen Elements (28) an den Windabweiser (16) bei einem Verschwenken des Windabweisers (16) beschreibt.
